# EUROPÄISCHE PATENTANMELDUNG

(11) **EP 2 456 040 A1**
(43) Veröffentlichungstag der Anmeldung: **23.05.2012**
(21) Anmeldenummer: 10191922.3
(22) Anmeldetag: 19.11.2010
(51) Int. Cl.: H02J 7/34

(54) **Schaltung zum Speichern elektrischer Energie**

(71) Anmelder: Flextronic Int.Kft, 8900 Zalaegerszeg (HU)
(72) Erfinder: Tiritoglu, Okan, 70193 Stuttgart (DE)
(74) Vertreter: Rupprecht, Kay

(57) **Zusammenfassung**

Die vorliegende Erfindung betrifft eine Schaltung 10 zum Speichern elektrischer Energie, insbesondere zum Einbau in ein Kraftfahrzeug. Die Schaltung umfasst mindestens einen Kondensator 12, 14, 16, 18, 20, 22 und einen temperaturabhängigen Widerstand 24, über den der mindestens eine Kondensator geladen werden kann. Darüber hinaus betrifft die Erfindung ein Kraftfahrzeug mit einer erfindungsgemäßen Schaltung sowie ein Verfahren zum Umrüsten eines Kraftfahrzeuges.

## Beschreibung

Die vorliegende Erfindung betrifft eine Schaltung zum Speichern elektrischer Energie, insbesondere zum Einbau in ein Kraftfahrzeug.

Aus dem Stand der Technik sind Batterien, insbesondere Bleibatterien, bekannt, die in Fahrzeugen zum Speichern elektrischer Energie verwendet werden.

Darüber hinaus sind aus dem Stand der Technik Kondensatoren zum Speichern elektrischer Energie bekannt.

Es ist eine Aufgabe der vorliegenden Erfindung, eine weitere Schaltung zum Speichern elektrischer Energie, insbesondere zum Einbau in ein Kraftfahrzeug, bereitzustellen. Weitere Aufgaben der Erfindung sind ein Kraftfahrzeug mit einer solchen Schaltung sowie ein Verfahren zum Umrüsten eines Kraftfahrzeugs bereitzustellen, so dass das Kraftfahrzeug die Schaltung verwendet.

Die erste Aufgabe wird gelöst durch eine Schaltung nach Anspruch 1. Die weiteren Aufgaben werden gelöst durch ein Kraftfahrzeug nach Anspruch 8 und ein Verfahren nach Anspruch 9. Die abhängigen Ansprüche geben Ausführungsformen der Schaltung an.

Die Erfindung umfasst eine Schaltung zum Speichern elektrischer Energie, insbesondere zum Einbau in ein Kraftfahrzeug, mit mindestens einem Kondensator und einem temperaturabhängigen Widerstand, über den der mindestens eine Kondensator geladen werden kann.

Der temperaturabhängige Widerstand kann dabei den Stromfluss beim Aufladevorgang steuern, insbesondere begrenzen.

In einer Ausführungsform umfasst die Schaltung eine Diode, über die der mindestens eine Kondensator entladen werden kann. Dies ermöglicht es, den Kondensator ohne die Strombegrenzung durch den temperaturabhängigen Widerstand zu entladen.

In einer Ausführungsform umfasst die erfindungsgemäße Schaltung einen zusätzlichen Widerstand. Dieser kann zum temperaturabhängigen Widerstand parallel oder seriell geschaltet sein. Zumeist sind konventionelle Widerstände kostengünstiger als temperaturabhängige Widerstände. Durch den zusätzlichen Widerstand kann unter Umständen der temperaturabhängige Widerstand kleiner ausgelegt werden, wodurch dieser billiger wird.

In einer Ausführungsform ist der mindestens eine Kondensator ein Doppelschichtkondensator. Doppelschichtkondensatoren haben den Vorteil, dass sie eine hohe Energiedichte aufweisen.

Insbesondere kann der eine Kondensator ein UltraCAP sein. Ein UltraCAP ist ein besonders gängiger und leicht zu beschaffender Doppelschichtkondensator mit vorteilhaften Eigenschaften.

In einer Ausführungsform ist der temperaturabhängige Widerstand ein PTC Thermistor (PTC = positive temperature coefficient). Ein solcher PTC Thermistor hat die Eigenschaft, dass sein bereitgestellter Widerstand bei höheren Temperaturen zunimmt. Ohne eine temperaturabhängigen Widerstand würden beim Laden der Kondensatoren möglicherweise sehr hohe Ströme auftreten, wodurch es beispielsweise zum Schmelzen von Leitungen kommen kann. Darüber hinaus könnten externe Überlast- oder Kurzschlussschutzmechanismen ausgelöst werden. Der PTC Thermistor hat die Eigenschaft, dass sein Widerstand höher wird, wenn er sich erwärmt. Durch den höheren Widerstand wirkt er einem hohen Stromfluss und damit einer weiteren Erwärmung entgegen. Auf diese Weise ist der PTC Thermistor fähig, den Stromfluss zu begrenzen, so dass keine übermäßige Wärmeentwicklung stattfindet und die Leitungen vor einem Schmelzen geschützt werden.

In einer Ausführungsform sind der mindestens eine Kondensator und der temperaturabhängige Widerstand auf einem Stanzgitter angeordnet. Bei dieser Ausführungsform sind die Bauteile als konventionelle Bauteile und nicht als surface mounted device (SMD) ausgebildet. Auf diese Weise ist keine Leiterplatte notwendig. Alternativ kann auch eine Leiterplatte verwendet werden. Es ergeben sich Kostenvorteile, wenn keine SMD-Bestückung notwendig ist.

Zusätzlich umfasst die vorliegende Erfindung ein Kraftfahrzeug, das mit einer erfindungsgemäßen Schaltung ausgerüstet ist.

Darüber hinaus umfasst die Erfindung ein Verfahren zum Umrüsten eines Kraftfahrzeugs. Bei diesem Verfahren wird eine in einem konventionellen Kraftfahrzeug befindliche Batterie durch eine erfindungsgemäße Schaltung ausgetauscht.

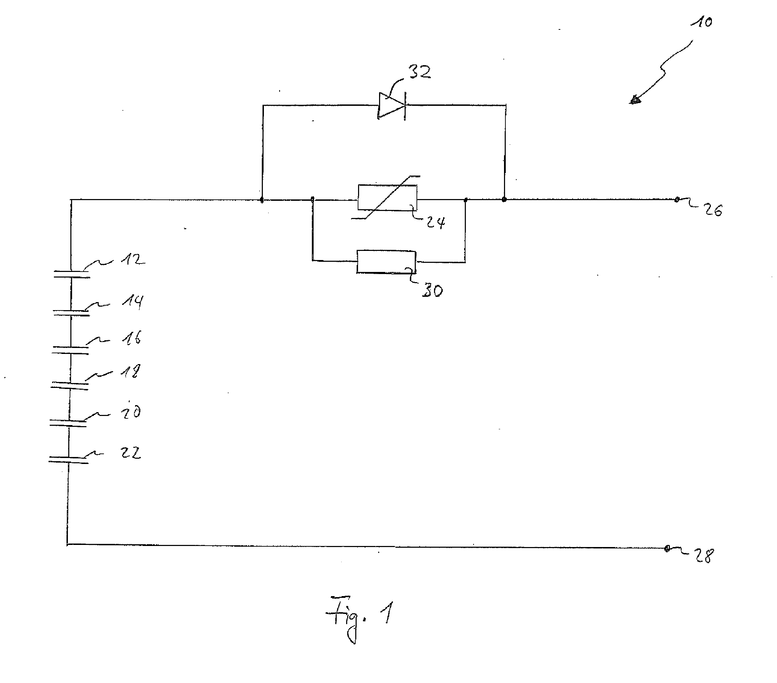

Weitere Details und Vorteile der vorliegenden Erfindung werden im Folgenden mit Bezug auf Figur 1 erläutert, die eine Ausführungsform einer erfindungsgemäßen Schaltung zeigt.

Die in Figur 1 gezeigte Ausführungsform einer erfindungsgemäßen Schaltung 10 umfasst sechs Kondensatoren 12, 14, 16, 18, 20, 22, insbesondere UltraCAP-Zellen. Vorteile ergeben sich, wenn die UltraCAP-Zellen ein gut abgestimmtes Kapazitätsverhältnis zueinander haben, da die Zellen während des Ladevorgangs weder nach Spannung geprüft, noch balanciert werden. Diese Abstimmung kann beispielsweise über ein Selektionsverfahren während der UltraCAP-Herstellung realisiert werden. Darüber hinaus können zusätzliche Kondensatoren vorgesehen werden, damit genug Spannungsreserve für das Zellpaket besteht. Die in Figur 1 gezeigte serielle Anordnung der UltraCAP-Zellen ermöglicht beispielsweise maximale Ladespannungen im Bereich von 12 Volt oder 24 Volt. Einzelne UltraCAP-Zellen haben in der Regel eine maximale Spannung von 2,5-2,7 Volt.

Die gezeigte Ausführungsform einer erfindungsgemäßen Schaltung 10 umfasst weiterhin einen PTC Thermistor 24. Über diesen PTC Thermistor 24 können die Kondensatoren 12, 14, 16, 18, 20, 22 durch Anlegen einer Spannung an die Anschlüsse 26, 28 geladen werden. Dabei reguliert der PTC Thermistor 24 den Ladestrom unabhängig vom Ladezustand der Kondensatoren 12, 14, 16, 18, 20, 22. Parallel zum PTC Thermistor 24 ist ein konventioneller Widerstand 30 vorgesehen. Durch diesen kann der PTC Thermistor 24 kleiner ausgelegt werden, wodurch er billiger wird. Alternativ könnte der konventionelle Widerstand 30 auch seriell zum PTC Thermistor 24 angeordnet sein. Darüber hinaus ist es denkbar, dass ein erster zusätzlicher Widerstand parallel zum PTC Thermistor 24 und ein zweiter zusätzlicher Widerstand seriell zum PTC Thermistor 24 angeordnet ist. Ein Entladen der Kondensatoren 12, 14, 16, 18, 20, 22 erfolgt bei der dargestellten Schaltung 10 über eine Diode 32, die parallel zum PTC Thermistor 24 geschaltet ist. Die Diode ermöglicht höhere Entladeströme als sie über den PTC Thermistor darstellbar wären.

Die Erfindung kann verschiedene Vorteile aufweisen. Im Vergleich zu herkömmlichen Bleibatterien ermöglichen Kondensatoren eine deutliche höhere Zyklisierung. Bleibatterien können in der Regel etwa 50 mal vollständige geladen und entladen werden. Im Gegensatz dazu sind Kondensatoren zwischen 50000 mal und 1000000 mal wieder aufladbar. Somit kann die erfindungsgemäße Schaltung zum Beispiel bei Verwendung in einem Kraftfahrzeug für die gesamte Fahrzeuglebensdauer funktionsfähig bleiben. Auf diese Weise wird die Notwendigkeit eines Austausches der Energiespeichervorrichtung des Fahrzeugs in einer Werkstatt beseitigt. Bei Anwendungen, die wenig Energieinhalt erfordern, bieten Kondensatoren im Vergleich zu einer Bleibatterie mit ähnlicher Leistung Vorteile bei Gewicht und Baugröße. Die erfindungsgemäße Schaltung kann in der Regel problemlos im Kraftfahrzeug gegen eine Bleibatterie ausgetauscht werden.

Die mit Bezug auf Figur 1 gemachten Ausführungen sind rein illustrativ und nicht beschränkend zu verstehen. An der in der Figur 1 gezeigten Ausführungsform können selbstverständlich Modifikationen vorgenommen werden, ohne vom Erfindungsgedanken, wie in der Ansprüchen dargelegt ist, abzuweichen.

### Bezugszeichenliste

- 10: Schaltung
- 12, 14, 16, 18, 20, 22: Kondensator
- 24: PTC Thermistor
- 26, 28: Anschlüsse
- 30: Widerstand
- 32: Diode

## Patentansprüche

1. Schaltung (10) zum Speichern elektrischer Energie, insbesondere zum Einbau in ein Kraftfahrzeug, umfassend
- mindestens einen Kondensator (12, 14, 16, 18, 20, 22) und
- einen temperaturabhängigen Widerstand (24), über den der mindestens eine Kondensator geladen werden kann.

2. Schaltung nach Anspruch 1, mit einer Diode (32), über die der mindestens eine Kondensator entladen werden kann.

3. Schaltung nach Anspruch 1 oder 2, mit einem zusätzlichen Widerstand (30), der zum temperaturabhängigen Widerstand parallel oder seriell geschaltet ist.

4. Schaltung nach einem der vorhergehenden Ansprüche, wobei der mindestens eine Kondensator (12, 14, 16, 18, 20, 22) ein Doppelschicht-Kondensator ist.

5. Schaltung nach einem der vorhergehenden Ansprüche, wobei der temperaturabhängige Widerstand (24) ein PTC Thermistor ist.

6. Schaltung nach einem der vorhergehenden Ansprüche, wobei der mindestens eine Kondensator und der temperaturabhängige Widerstand auf einem Stanzgitter angeordnet sind.

7. Kraftfahrzeug mit einer Schaltung (10) nach einem der vorhergehenden Ansprüche.

8. Verfahren zum Umrüsten eines Kraftfahrzeugs mit dem Schritt Austauschen einer Batterie des Kraftfahrzeugs durch eine Schaltung (10) nach einem der Ansprüche 1 bis 6.

## Geänderte Patentansprüche

### Geänderte Patentansprüche gemäss Regel 137(2) EPÜ.

**1.** Schaltung (10) zum Speichern elektrischer Energie, insbesondere zum Einbau in ein Kraftfahrzeug, umfassend
- mindestens einen Kondensator (12, 14, 16, 18, 20, 22) und
- einen temperaturabhängigen Widerstand (24), über den der mindestens eine Kondensator geladen werden kann, und der einen Stromfluss bei einem Aufladevorgang begrenzen kann und
- eine Diode (32), über die der mindestens eine Kondensator ohne eine Strombegrenzung durch den temperaturabhängigen Widerstand entladen werden kann.

**2.** Schaltung nach Anspruch 1, mit einem zusätzlichen Widerstand (30), der zum temperaturabhängigen Widerstand parallel oder seriell geschaltet ist.

**3.** Schaltung nach einem der vorhergehenden Ansprüche, wobei der mindestens eine Kondensator (12, 14, 16, 18, 20, 22) ein Doppelschicht-Kondensator ist.

**4.** Schaltung nach einem der vorhergehenden Ansprüche, wobei der temperaturabhängige Widerstand (24) ein PTC Thermistor ist.

**5.** Schaltung nach einem der vorhergehenden Ansprüche, wobei der mindestens eine Kondensator und der temperaturabhängige Widerstand auf einem Stanzgitter angeordnet sind.

**6.** Kraftfahrzeug mit einer Schaltung (10) nach einem der vorhergehenden Ansprüche.

**7.** Verfahren zum Umrüsten eines Kraftfahrzeugs mit dem Schritt Austauschen einer Batterie des Kraftfahrzeugs durch eine Schaltung (10) nach einem der Ansprüche 1 bis 5.
